# FASCICULE DE BREVET EUROPEEN

(11) **EP 3 387 795 B1**
(45) Date de publication et mention de la délivrance du brevet: **09.11.2022**
(21) Numéro de dépôt: 16815615.6
(22) Date de dépôt: 29.11.2016
(51) Int. Cl.: H04L 12/28, H04L 47/2483, H04L 47/10

(54) **ROUTEUR D'UN RESEAU DOMESTIQUE, INTERFACE DE SUPERVISION ET UN PROCEDE DE SUPERVISION DE L'UTILISATION D'UN RESEAU DOMESTIQUE**
ROUTER EINES HEIMNETZWERKS, ÜBERWACHUNGSSCHNITTSTELLE UND VERFAHREN ZUR ÜBERWACHUNG DER NUTZUNG EINES HEIMNETZWERKS
ROUTER OF A DOMESTIC NETWORK, SUPERVISION INTERFACE AND METHOD FOR SUPERVISING THE USE OF A DOMESTIC NETWORK

(30) Priorité: 11.12.2015 FR 1562227
(43) Date de publication de la demande: 17.10.2018
(73) Titulaire: Orange, 92130 Issy-les-Moulineaux (FR)
(72) Inventeur: SIMON, Pierre-Henri, 22300 Lannion (FR)
(86) Numéro de dépôt international: PCT/FR2016/053130
(87) Numéro de publication internationale: WO 2017/098112

(56) Documents cités:
- EP-A1- 1 381 198
- US-A1- 2003 005 130
- US-A1- 2008 052 387
- US-A1- 2010 005 170
- US-A1- 2011 277 001
- US-A1- 2012 131 466

## Description

L'invention concerne un routeur d'un réseau domestique et un procédé de supervision de l'utilisation d'un réseau domestique.

Nos réseaux domestiques, aussi nommé réseaux locaux, comportent un nombre grandissant de terminaux avec la multiplication des types de terminaux connectés: télévisions connectées, décodeurs de télévision (set-top box en anglais), tablettes, smartphone, ordinateurs... Pour cette raison lorsque l'utilisateur d'un terminal dans un réseau domestique observe des lenteurs sur un traitement mis en œuvre par son terminal, il ne sait pas déterminer l'origine de ces lenteurs.

Le routeur, notamment la Livebox, ou plus généralement un routeur d'accès à un réseau d'un opérateur de réseau de communication (xDSL, Satellite, Fibre, mobile....) est apte à fournir le débit global entrant et sortant sur réseau domestique. Ainsi, l'utilisateur d'un terminal connecté à ce réseau domestique peut obtenir ces informations de débits globaux du routeur. Mais, le routeur ne dispose pas aujourd'hui de la part de ces débits globaux (montant et descendant) absorbée par chaque terminal connecté au réseau domestique.

Une solution serait que l'utilisateur effectue sur chaque terminal connecté au réseau domestique une analyse des échanges, puis qu'il compare les résultats de ces analyses avec le débit global du routeur. Or, ces opérations sont non seulement fastidieuses, mais en plus elles nécessitent des compétences en informatique de l'utilisateur. En outre, l'utilisateur effectuant l'analyse de chaque terminal l'une après l'autre, le résultat est partiellement hasardeux car la situation des échanges sur le premier terminal analysé peut avoir évolué lorsque l'utilisateur procèdera à l'analyse des échanges sur le dernier terminal analysé.

Ainsi, le plus souvent, l'utilisateur en est réduit à arrêter un traitement sur un terminal connecté, voire à déconnecter un terminal du réseau domestique en espérant ainsi retrouver pour les autres terminaux connectés une vitesse des échanges satisfaisantes pour les traitements en cours sur ces terminaux connectés. Si, ce n'est pas le cas, il procèdera par tâtonnement en arrêtant les uns après les autres les autres traitements mis en œuvre par le terminal connecté et/ou les autres terminaux connectés, voire en déconnectant les autres terminaux connectés au réseau domestique. Ce processus peut donc :
- être très long,
- avec des résultats hasardeux car le traitement en cause dans les lenteurs s'étant terminé par lui-même, la vitesse des échanges reviendra à la normale sans aucun lien avec les opérations menées par l'utilisateur,
- être très long,
- avec des résultats hasardeux car le traitement en cause dans les lenteurs s'étant terminé par lui-même, la vitesse des échanges reviendra à la normale sans aucun lien avec les opérations menées par l'utilisateur,
- éventuellement même sans résultat car le traitement en cause peut être un traitement en tâche de fond non visible par un utilisateur non administrateur,
- voire avec un impact négatif sur un traitement en cours lors de la déconnection du réseau domestique du terminal connecté mettant en œuvre ce traitement, ou un traitement arrêté trop brusquement, etc.

Il est connu de la demande de brevet US 2012/131466 A1 un système de surveillance et de contrôle de réseau par un utilisateur proposant des outils et techniques permettant à un utilisateur de mieux visualiser l'utilisation et/ou la performance d'un réseau.

Un des buts de la présente invention est d'apporter des améliorations par rapport à l'état de la technique.

Un objet de l'invention est un routeur d'un réseau domestique apte à être connecté à plusieurs terminaux de communication, le routeur comporte:
- un récepteur de données temps réels d'utilisation des ressources du réseau par au moins un terminal de communication provenant du au moins un terminal de communication ; et
- un superviseur des ressources du réseau domestique à partir de données temps réels reçues d'utilisation des ressources du réseau domestique par des terminaux de communication connectés au réseau domestique.

Ainsi, le routeur dispose, à un instant donné, non seulement des débits globaux montant et descendant mais aussi de la part de ces débits relatifs à au moins un terminal connecté, voire de la part de ces débits relatifs à des terminaux connectés.

Avantageusement, le superviseur comporte un analyseur des trames passant par le routeur, l'analyseur déterminant à partir des trames au moins des données temps réels d'utilisation des ressources du réseau domestique par au moins un des terminaux connectés au routeur.

Ainsi, la récupération par le routeur de la part d'utilisation du réseau domestique relative à au moins un terminal connecté n'est pas couteuse en termes de ressources pour ce réseau domestique.

Avantageusement, l'analyseur de trames détermine, pour une trame passant par le routeur, le terminal échangeant la trame à partir d'une adresse contenu par la trame.

Ainsi, seule l'utilisation prolongée des ressources du réseau domestique déclenchant des lenteurs telles qu'elle provoque une gêne pour l'utilisateur d'un des terminaux connectés est détectée.

Avantageusement, le superviseur comporte un collecteur de données temps réels d'utilisation des ressources du réseau domestique par au moins un des terminaux connectés au routeur, les données temps réels d'utilisation des ressources par un terminal provenant du terminal.

Ainsi, les analyses déjà effectuées par certains des terminaux connectées sont utilisées par le routeur réduisant les calculs effectués par le routeur.

Avantageusement, le routeur comporte un transmetteur de service établissant une connexion de service avec un terminal, la connexion de service étant déclenchée par une connexion de communication du terminal au routeur, la connexion de service permettant au collecteur de données de récupérer les données temps réels d'utilisation des ressources par le terminal.

Ainsi, les sessions de communications déjà utilisée par les traitements mis en œuvre par les terminaux connectés ne sont pas surchargées par des données de services, notamment les données d'utilisation des ressources par le terminal connecté.

Avantageusement, le superviseur comporte un mesureur de latence émettant un signal de type « ping » à destination d'au moins un terminal connecté au routeur et recevant en retour le signal de type « ping » renvoyé par le terminal permettant au mesureur de déterminer une latence du terminal.

Ainsi, le routeur peut déterminer rapidement par simple mesure de latence le terminal avec lequel les échanges sont les plus lents.

Avantageusement, le superviseur comporte un agrégateur temps réel des données temps réels d'utilisation des ressources du réseau domestique par des terminaux de communication connectés au réseau domestique, l'agrégateur étant apte à fournir, en temps réel, à au moins une interface de supervision mise en œuvre par un des terminaux connectés, des données agrégées d'utilisation des ressources du réseau domestique.

Ainsi, le routeur propose l'ensemble des données d'utilisation des ressources du réseau domestique par terminal permettant leur comparaison entre eux et/ou au débits globaux afin que soit l'utilisateur recevant l'information par l'intermédiaire d'une interface de reproducteur et/ou le superviseur lui-même puisse détecter un problème, par exemple des lenteurs de transmission dans le réseau domestique, et éventuellement en déterminer l'origine, c'est-à-dire le terminal connecté et/ou le traitement mis en œuvre par un terminal connecté à l'origine du problème détecté.

Avantageusement, le superviseur comporte un détecteur de problème relatif au réseau domestique déclenchant un moteur de recherche d'une origine du problème utilisant les données temps réels d'utilisation des ressources du réseaux par au moins un des terminaux connectés au routeur.

Ainsi, le superviseur fournissant rapidement une information concernant un problème naissant et notamment son origine permettra d'y remédier avant que celui-ci ne devienne gênant pour un ou plusieurs des terminaux connectés et leurs utilisateurs.

Avantageusement, le superviseur comporte un temporisateur reportant une exécution d'un traitement par un terminal connecté au routeur, le traitement exécuté par le terminal ayant été identifié par le moteur de recherche d'origine de problème.

Ainsi, le superviseur fournissant rapidement une solution à un problème naissant celui n'aura même pas le temps de gêner les terminaux connectés au réseau domestique, ni leurs utilisateurs. Notamment, le temporisateur reportent uniquement l'exécution de traitements réputés reportables.

Un objet de l'invention est aussi une interface de supervision apte à être mise en œuvre par au moins un terminal connecté à un routeur d'un réseau domestique, l'interface de supervision comportant un générateur de données de reproduction fonction de données temps réels fournies par un superviseur des ressources du réseau domestique à partir de données temps réels d'utilisation des ressources du réseau domestique par au moins un des terminaux de communication connectés au réseau domestique.

Un objet de l'invention est également un procédé de supervision de l'utilisation d'un réseau domestique comportant un routeur apte à être connecté à plusieurs terminaux de communication, le procédé de supervision comporte une surveillance des ressources du réseau domestique à partir de données temps réels d'utilisation des ressources du réseau domestique par des terminaux de communication connectés au réseau domestique.

Avantageusement le procédé de supervision comporte une analyse des trames passant par le routeur, l'analyse déterminant à partir des trames au moins des données temps réels d'utilisation des ressources du réseau domestique par au moins un des terminaux connectés au routeur.

Un objet de l'invention est aussi une interface de supervision apte à être mise en œuvre par au moins un terminal connecté à un routeur d'un réseau domestique, l'interface de supervision comportant un générateur de données de reproduction fonction de données temps réels fournies par un superviseur des ressources du réseau domestique à partir de données temps réels reçues d'utilisation des ressources du réseau domestique par au moins un des terminaux de communication connectés au réseau domestique, les données temps réels d'utilisation des ressources du réseau par au moins un terminal de communication étant reçues en provenance du au moins un terminal de communication.

Un objet de l'invention est également un procédé de supervision de l'utilisation d'un réseau domestique comportant un routeur apte à être connecté à plusieurs terminaux de communication, le procédé de supervision comporte une surveillance des ressources du réseau domestique à partir de données temps réels reçues d'utilisation des ressources du réseau domestique par des terminaux de communication connectés au réseau domestique, les données temps réels d'utilisation des ressources du réseau par au moins un terminal de communication étant reçues en provenance du au moins un terminal de communication.

Avantageusement le procédé de supervision comporte une analyse des trames passant par le routeur, l'analyse déterminant à partir des trames au moins des données temps réels d'utilisation des ressources du réseau domestique par au moins un des terminaux connectés au routeur.

Avantageusement, le procédé de supervision comporte une détection de problème relatif au réseau domestique déclenchant une recherche d'une origine du problème utilisant les données temps réels d'utilisation des ressources du réseau domestique par au moins un des terminaux connectés au routeur.

Avantageusement, le procédé de supervision comporte un report d'une exécution d'un traitement par un terminal connecté au routeur, le traitement exécuté par le terminal ayant été identifié par le moteur de recherche d'origine de problème.

Avantageusement, selon une implémentation de l'invention, les différentes étapes du procédé selon l'invention sont mises en œuvre par un logiciel ou programme d'ordinateur, ce logiciel comprenant des instructions logicielles destinées à être exécutées par un processeur de données d'un dispositif faisant partie d'un routeur et étant conçus pour commander l'exécution des différentes étapes de ce procédé.

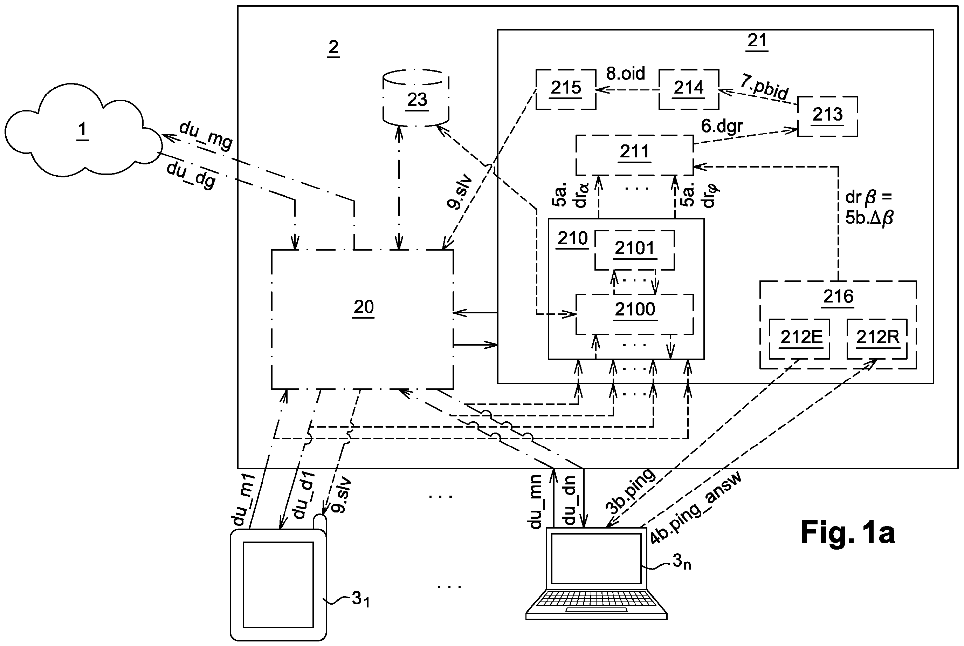

La figure 1a illustre un schéma simplifié d'une architecture de réseau domestique comportant un routeur 2 selon l'invention dans un mode de réalisation centralisée.

L'architecture de réseau domestique comporte un routeur selon l'invention, des terminaux 3₁ à 3ₙ connectés au routeur 2 constituant le réseau domestique, et un réseau internet 1. Les terminaux 3₁ à 3ₙ échangent avec le routeur 2 des données utiles montantes du_m₁...du_mₙ, c'est-à-dire des terminaux 3₁ à 3ₙ vers le routeur 2, et des données utiles descendantes du_d₁...du_dₙ, c'est-à-dire du routeur 2 vers les terminaux 3₁ à 3ₙ propres aux traitements mis en œuvre par chacun des terminaux, notamment sous la forme d'application exécutée par un processeur (non illustré) du terminal. Les terminaux 3₁ à 3ₙ et le routeur 2 comportent chacun un transmetteur local, notamment un émetteur local et un récepteur local, (non illustrés) effectuant ces échanges sur le réseau domestique, notamment par liaison Ethernet et/ou Wifi... Les terminaux connectés sont notamment des smartphones 3₁, des tablettes, des ordinateurs 3ₙ...

Le routeur 2 est, notamment, connecté à un réseau distant tel qu'un réseau Internet1 via une liaison filaire ou non, notamment xDSL, Fibre, Satellite, mobile tel que 4G, H+, Edge... Le routeur 2 comporte alors, par exemple, un transmetteur distant, notamment un émetteur distant et un récepteur distant, (non illustrés) effectuant des échanges entre le routeur 2 et le réseau distant 1 notamment des données utiles montantes du_m_{g}, c'est-à-dire du réseau distant 1 vers le routeur 2, et des données utiles descendantes du_d_{g}, c'est-à-dire du routeur 2 vers le réseau distant 1. Ces données utiles du_m_{g} et/ou du_d_{g} regroupent, notamment, les données utiles échangées par un, plusieurs voire la totalité des terminaux connectés 3₁ à 3ₙ et le routeur 2.

Le routeur 2 comporte notamment un relai 20 apte à lire les trames des données utiles échangées provenant du réseau distant 1 : du_d_{g} et/ou des terminaux connectés 3₁ à 3ₙ : du_m₁...du_mₙ et à les transmettre à leur destinataire, par exemple en consultant une table d'adressage 23.

Le routeur 2 d'un réseau domestique est apte à être connecté à plusieurs terminaux de communication 3₁ à 3ₙ. Le routeur 2 comporte un superviseur 21 des ressources du réseau domestique à partir de données temps réels d'utilisation des ressources drα...drµ du réseau domestique par au moins un des terminaux de communication connectés 3₁ ... 3ₙ au réseau domestique.

En particulier, le superviseur 21 comporte un analyseur 210 des trames passant par le routeur 2. L'analyseur 210 détermine à partir des trames du_m₁, du_d₁... du_mₙ, du_dₙ au moins des données temps réels d'utilisation des ressources drα...drµ du réseau domestique par au moins un des terminaux connectés au routeur 3₁ ... 3ₙ.

En particulier, l'analyseur de trames 210 détermine, pour une trame du_mᵢ ou dudᵢ passant par le routeur 2, le terminal 3ᵢ échangeant la trame à partir d'une adresse contenu par la trame. Notamment, l'analyseur de trames 210 comporte un lecteur 2100 d'adresse dans les trames passant par le routeur 2 pour déterminer le terminal 3ᵢ échangeant une trame du_mᵢ ou dudᵢ. Le lecteur d'adresse 2100 utilise éventuellement une table d'adressage 23 du routeur 2.

En particulier, l'analyseur de trames 210 stocke sur une fenêtre de temps prédéterminée glissante les données temps réels d'utilisation driᵢ des ressources du réseau domestique par un terminal 3ᵢ. Notamment, l'analyseur de trames comporte un calculateur 2101 stockant sur la fenêtre de temps prédéterminée glissante les données temps réels d'utilisation driᵢ des ressources du réseau domestique par un terminal 3_{i.}

En particulier, le superviseur 21 comporte un mesureur de latence 212 émettant un signal de type « ping » à destination d'au moins un terminal 3ₙ connecté au routeur et recevant en retour le signal de type « ping » renvoyé par le terminal 3ₙ permettant au mesureur 212 de déterminer une latence du terminal Δβ. Notamment, le superviseur comporte un émetteur 212E de signal « ping » ou un générateur 212E de signal « ping » utilisant l'émetteur local (non illustré) du routeur 2, et un récepteur 212R de réponse à un signal « ping » ou un détecteur 212R de réponse à un signal « ping » connecté au récepteur local (non illustré) du routeur 2.

Sur l'exemple de la figure 1a, l'émetteur 212E envoie un signal 3b. *ping* à au moins un terminal connecté 3ₙ, qui répond par un signal de réponse 4b. *ping answ.* Le mesureur de latence 212 fournit alors au moins un signal de latence 5b. Δβ correspondant à la latence de ce au moins un terminal connecté 3_{n.}

En particulier, le superviseur 21 comporte un agrégateur temps réel 211 des données temps réels d'utilisation des ressources drα...drµ, Δβ du réseau domestique par des terminaux de communication connectés 3₁... 3ₙ au réseau domestique. L'agrégateur 211 est apte à fournir, en temps réel, à au moins une interface de supervision mise en œuvre par un des terminaux connectés 3₁... 3ₙ, des données agrégées *dgr* d'utilisation des ressources du réseau domestique.

Sur l'exemple de la figure 1a, l'agrégateur temps réel 211 reçoit plusieurs signaux de données temps réels d'utilisation des ressources, respectivement 5a.drα...5a.drµ., et éventuellement au moins un signal de latence 5b. Δβ, et fournit alors un signal agrégé 6. *dgr.*

En particulier, le superviseur 21 comporte un détecteur de problème 213 relatif au réseau domestique déclenchant un moteur de recherche d'une origine du problème 214 utilisant les données temps réels d'utilisation des ressources drα...drµ, Δβ du réseaux par au moins un des terminaux 3₁... 3ₙ connectés au routeur.

Le détecteur de problème 213 reçoit soit directement les données temps réels d'utilisation des ressources 5a.drα...5α.drµ, et/ou 5β.Δβ; soit, comme le montre la figure 1a, le signal agrégé 6.dgr, et fournit, lorsqu'il détecte un problème sur le réseau domestique : lenteurs de transmission, congestion du réseau (c'est-à-dire un ratio débit utilisé/capacité du réseau domestique proche de 1), etc., ou un problème naissant tel qu'un ralentissement d'au moins une transmission, un début de congestion, etc., un signal 7.pbid déclenchant le moteur de recherche 214. Ce signal 7.pbid peut être une simple commande du moteur de recherche 214 et/ou comporter un identifiant du problème 7.pbid, tel que l'adresse du terminal utilisant le plus de ressources du réseaux domestique et/ou l'adresse du terminal dont la latence est la plus élevée et/ou les données temps réels d'utilisation de ressources correspondante (débit montant et/ou débit descendant et/ou latence, etc.), etc.

Le moteur de recherche 214 utilise, en particulier, les données temps réels d'utilisation des ressources 5a.drα...5a.drµ, et/ou 5β.Δβ et/ou les données contenues dans le signal 7.pbid provenant du détecteur de problème 213. Ainsi, le moteur de recherche peut déterminer s'il y a un ou plusieurs problèmes, pour chaque problème : le type de problème, le(s) terminaux posant problème, et, éventuellement, le(s) traitement(s) à l'origine du problème parmi ceux mis en œuvre par le(s) terminaux... Sur la figure 1a, le moteur de recherche fournit comme résultat un signal d'origine 8.oid comportant des données d'identifications d'un ou plusieurs des éléments déterminés ci-dessus.

En particulier, le superviseur 21 comporte un temporisateur 215 reportant une exécution d'un traitement par un terminal 3₁... 3ₙ connecté au routeur2. Le traitement exécuté par le terminal 3₁... 3ₙ a été identifié par le moteur de recherche d'origine de problème 214.

Un temporisateur 215 recevant notamment le signal d'origine 8.oid sera capable de générer une commande 9.slv à destination du terminal à l'origine du problème détecté afin notamment de reporter un ou plusieurs traitements du terminal. Par exemple, les traitements ne nécessitant pas d'interaction avec l'utilisateur sont automatiquement reportés à une période de la journée ou le réseau domestique est généralement moins chargé (par exemple, la nuit) ou des reports sont proposés à l'utilisateur du terminal au moyen d'une interface de supervision mise en œuvre par le terminal permettant à l'utilisateur de choisir le report d'un ou plusieurs traitement en fonction de leur influence sur la charge du réseau domestique et/ou de leur intérêt immédiat pour lui (par exemple, un téléchargement quotidien de photos vers le cloud aura moins d'intérêt immédiat pour l'utilisateur que le streaming de données d'un jeu vidéo sur lequel il joue).

A noter, que le superviseur 21 peut superviser l'ensemble des terminaux connectés 3₁ à 3ₙ ou seulement une partie des terminaux connectés. Ainsi, le superviseur 21 effectue son traitement à partir de l'ensemble des données temps réels d'utilisation des ressources dr₁...drₙ (non illustré) de chacun des terminaux connectés 3₁ à 3ₙ ou seulement des données temps réels d'utilisation des ressources drα...drµ d'une partie des terminaux connectés 3α...3µ.

En particulier, au moins un des terminaux connectés et/ou le routeur comporte une interface de supervision (non illustrée). L'interface de supervision comporte un générateur de données de reproduction fonction de données temps réels fournies par un superviseur des ressources du réseau domestique à partir de données temps réels d'utilisation des ressources du réseau domestique par au moins un des terminaux de communication connectés au réseau domestique.

Les données générées comportent au moins une illustration des débits montant et/ou descendants entre le routeur 2 et au moins un des terminaux connectés, et/ou une illustration de la latence entre le routeur 2 et au moins un des terminaux connectés, et éventuellement un lien vers ou une commande de déclenchement d'un temporisateur en fonction du terminal et/ou de l'échange (montant ou descendant) concerné par l'interaction d'un utilisateur avec l'interface de supervision.

Dans le cas où l'interface de supervision est implémenté sur le routeur, une interface de reproduction et/ou d'interaction d'au moins un des terminaux connectés est connecté à l'interface de supervision pour reproduire et/ou interagir avec les données générées.

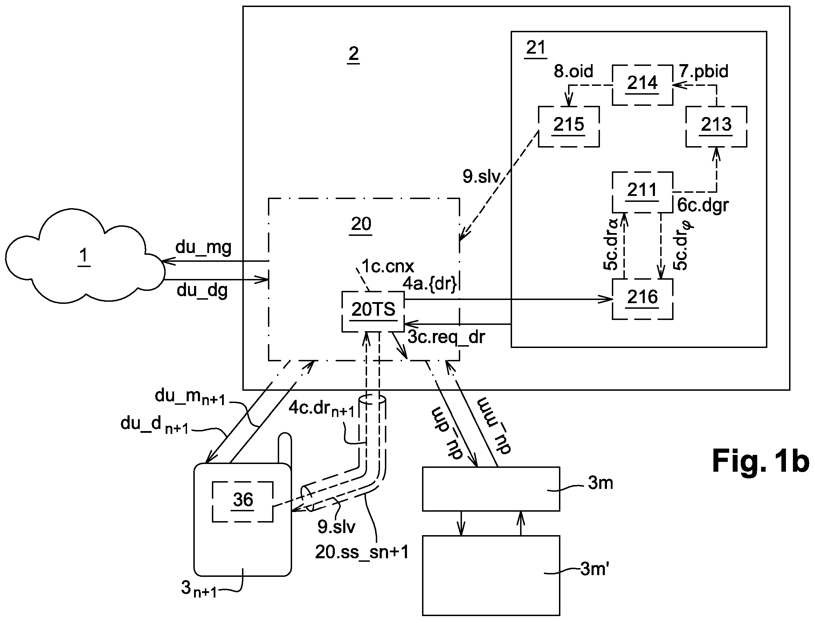

La figure 1b illustre un schéma simplifié d'une architecture de réseau domestique comportant un routeur selon l'invention dans un mode décentralisée.

L'architecture de réseau domestique comporte un routeur selon l'invention, des terminaux 3ₙ₊₁ à 3ₘ, 3_{m'} connectés au routeur 2 constituant le réseau domestique, et un réseau internet 1. Les terminaux 3ₙ₊₁ à 3_{m,} 3_{m'} échangent avec le routeur 2 des données utiles montantes du_mₙ₊₁...du_mₘ, c'est-à-dire des terminaux 3ₙ₊₁ à 3_{m,} 3_{m'} vers le routeur 2, et des données utiles descendantes du_dₙ₊₁...du_dₘ, c'est-à-dire du routeur 2 vers les terminaux 3ₙ₊₁ à 3_{m,} 3_{m'} propres aux traitements mis en œuvre par chacun des terminaux, notamment sous la forme d'application exécutée par un processeur (non illustré) du terminal. Les terminaux 3ₙ₊₁ à 3_{m,} 3_{m'} et le routeur 2 comportent chacun un transmetteur local, notamment un émetteur local et un récepteur local, (non illustrés) effectuant ces échanges sur le réseau domestique, notamment par liaison Ethernet et/ou Wifi... Les terminaux connectés sont notamment des smartphones 3ₙ₊₁, des tablettes, des ordinateurs, des décodeurs 3ₘ, des téléviseurs 3_{m'} connectés via un décodeur, des téléviseurs directement connectés au réseau domestique...

Le routeur 2 est, notamment, connecté à un réseau distant tel qu'un réseau Internet1 via une liaison filaire ou non, notamment xDSL, Fibre, Satellite, mobile tel que 4G, H+, Edge... Le routeur 2 comporte alors, par exemple, un transmetteur distant, notamment un émetteur distant et un récepteur distant, (non illustrés) effectuant des échanges entre le routeur 2 et le réseau distant 1 notamment des données utiles montantes du_m_{g}, c'est-à-dire du réseau distant 1 vers le routeur 2, et des données utiles descendantes du_d_{g}, c'est-à-dire du routeur 2 vers le réseau distant 1. Ces données utiles du_m_{g} et/ou du_d_{g} regroupent, notamment, les données utiles échangées par un, plusieurs voire la totalité des terminaux connectés 3ₙ₊₁ à 3_{m,} 3_{m'} et le routeur 2.

Le routeur 2 comporte notamment un relai 20 apte à lire les trames des données utiles échangées provenant du réseau distant 1 : du_d_{g} et/ou des terminaux connectés 3ₙ₊₁ à 3_{m,} 3_{m'}: du_mn₊₁...du_mₘ et à les transmettre à leur destinataire, par exemple en consultant une table d'adressage 23.

Le routeur 2 d'un réseau domestique 1 est apte à être connecté à plusieurs terminaux de communication 3ₙ₊₁ à 3_{m,} 3_{m'}. Le routeur 2 comporte un superviseur 21 des ressources du réseau domestique à partir de données temps réels d'utilisation des ressources drα...drµ du réseau domestique par au moins un des terminaux de communication connectés 3ₙ₊₁ à 3_{m,} 3_{m'}au réseau domestique.

En particulier, le superviseur 21 comporte un collecteur 216 de données temps réels d'utilisation des ressources drₙ₊₁...drₘ du réseau domestique par au moins un des terminaux connectés 3ₙ₊₁ à 3_{m,} 3_{m'} au routeur. Les données temps réels d'utilisation des ressources drₙ₊₁...drₘ par un terminal proviennent du terminal concerné 3ₙ₊₁ ... 3_{m,} 3_{m'}.

En particulier, le routeur 2 comporte un transmetteur de service 20TS établissant une connexion de service avec un terminal 3ₙ₊₁. La connexion de service est déclenchée par une connexion de communication du terminal 3ₙ₊₁ au routeur 2. La connexion de service permet au collecteur de données 216 de récupérer les données temps réels d'utilisation des ressources drₙ₊₁ par le terminal auprès du terminal concerné 3ₙ₊₁.

En particulier, le superviseur 21 comporte un agrégateur temps réel 211 des données temps réels d'utilisation des ressources drα...drµ du réseau domestique par des terminaux de communication connectés 3ₙ₊₁ ... 3_{m,} 3_{m'} au réseau domestique. L'agrégateur 211 est apte à fournir, en temps réel, à au moins une interface de supervision mise en oeuvre par un des terminaux connectés 3ₙ₊₁ ... 3_{m,} 3_{m'}, des données agrégées *dgr* d'utilisation des ressources du réseau domestique.

Sur l'exemple de la figure 1b, l'agrégateur temps réel 211 reçoit plusieurs signaux de données temps réels d'utilisation des ressources, respectivement 5c.drα...5c.drµ, et fournit alors un signal agrégé 6. *dgr.*

En particulier, le superviseur 21 comporte un détecteur de problème 213 relatif au réseau domestique déclenchant un moteur de recherche d'une origine du problème 214 utilisant les données temps réels d'utilisation des ressources drα...drµ, du réseaux par au moins un des terminaux 3₁... 3ₙ connectés au routeur.

Le détecteur de problème 213 reçoit soit directement les données temps réels d'utilisation des ressources 5c.drα...5c.drµ ; soit, comme le montre la figure 1b, le signal agrégé 6.dgr, et fournit, lorsqu'il détecte un problème sur le réseau domestique : lenteurs de transmission, congestion du réseau (c'est-à-dire un ratio débit utilisé/capacité du réseau domestique proche de 1), etc., ou un problème naissant tel qu'un ralentissement d'au moins une transmission, un début de congestion, etc., un signal 7.pbid déclenchant le moteur de recherche 214. Ce signal 7.pbid peut être une simple commande du moteur de recherche 214 et/ou comporter un identifiant du problème 7.pbid, tel que l'adresse du terminal utilisant le plus de ressources du réseaux domestique et/ou l'adresse du terminal dont la latence est la plus élevée et/ou les données temps réels d'utilisation de ressources correspondante (débit montant et/ou débit descendant et/ou latence, etc.), etc.

Le moteur de recherche 214 utilise, en particulier, les données temps réels d'utilisation des ressources 5c.drα...5c.drµ, et/ou les données contenues dans le signal 7.pbid provenant du détecteur de problème 213. Ainsi, le moteur de recherche peut déterminer s'il y a un ou plusieurs problèmes, pour chaque problème : le type de problème, le(s) terminaux posant problème, et, éventuellement, le(s) traitement(s) à l'origine du problème parmi ceux mis en œuvre par le(s) terminaux... Sur la figure 1b, le moteur de recherche fournit comme résultat un signal d'origine 8.oid comportant des données d'identifications d'un ou plusieurs des éléments déterminés ci-dessus.

En particulier, le superviseur 21 comporte un temporisateur 215 reportant une exécution d'un traitement par un terminal 3ₙ₊₁ ... 3_{m,} 3_{m'} connecté au routeur2. Le traitement exécuté par le terminal 3ₙ₊₁ ... 3_{m,} 3_{m'} a été identifié par le moteur de recherche d'origine de problème 214.

Un temporisateur 215 recevant notamment le signal d'origine 8.oid sera capable de générer une commande 9.slv à destination du terminal 3ₙ₊₁ à l'origine du problème détecté afin notamment de reporter un ou plusieurs traitements du terminal.

A noter, que le superviseur 21 peut superviser l'ensemble des terminaux connectés 3ₙ₊₁ ... 3_{m,} 3_{m'} ou seulement une partie des terminaux connectés. Ainsi, le superviseur 21 effectue son traitement à partir de l'ensemble des données temps réels d'utilisation des ressources drₙ₊₁...drₘ (non illustré) de chacun des terminaux connectés 3ₙ₊₁ ... 3_{m,} 3_{m'} ou seulement des données temps réels d'utilisation des ressources drα...drµ d'une partie des terminaux connectés 3α...3µ.

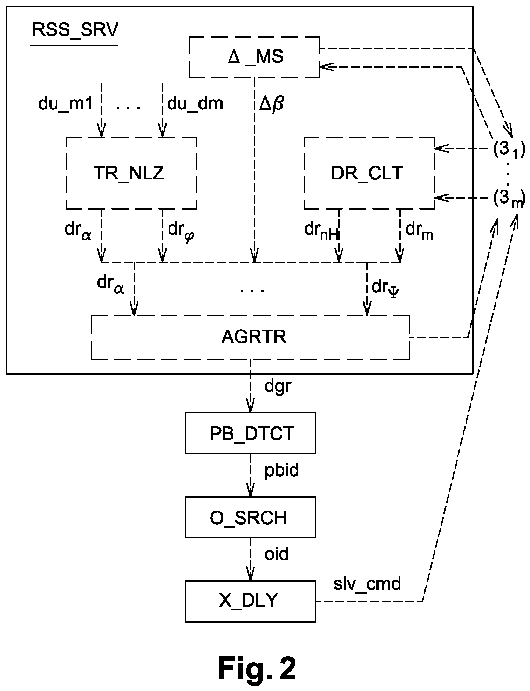

La figure 2 illustre un schéma simplifié du procédé de supervision selon l'invention.

Le procédé de supervision effectue une supervision de l'utilisation d'un réseau domestique comportant un routeur apte à être connecté à plusieurs terminaux de communication 3₁...3ₘ. Le procédé de supervision comporte une surveillance RSS_SRV des ressources du réseau domestique à partir de données temps réels d'utilisation des ressources drα...drµ du réseau domestique par des terminaux de communication connectés au réseau domestique.

En particulier, le procédé de supervision comporte une analyse TR_NLZ des trames passant par le routeur. L'analyse des trames TR_NLZ détermine, à partir des trames du_m1...du_dm, au moins des données temps réels d'utilisation des ressources drα...drµ du réseau domestique par au moins un des terminaux connectés 3₁...3ₘ au routeur.

Notamment, l'analyse des trames TR_NLZ détermine, pour une trame du_m1...du_dm passant par le routeur 2, le terminal 3ᵢ échangeant la trame à partir d'une adresse contenu par la trame. Par exemple, l'analyse des trames TR_NLZ comporte une lecture (non illustrée) d'adresse dans les trames passant par le routeur 2 pour déterminer le terminal 3ᵢ échangeant une trame du_mᵢ ou dudᵢ. La lecture d'adresse utilise éventuellement une table d'adressage du routeur 2.

Eventuellement, l'analyse des trames TR_NLZ stocke sur une fenêtre de temps prédéterminée glissante les données temps réels d'utilisation driᵢ des ressources du réseau domestique par un terminal 3ᵢ. Notamment, l'analyse des trames TR_NLZ comporte un stockage sur la fenêtre de temps prédéterminée glissante des données temps réels d'utilisation driᵢ des ressources du réseau domestique par un terminal 3ᵢ.

Par exemple, la surveillance RSS_RSV comporte une analyse de trames TR_NLZ comme illustrée par la figure 2.

Notamment, le procédé de supervision comporte une mesure de latence Δ_MS par émission d'un signal de type « ping » à destination d'au moins un terminal 3₁ connecté au routeur et recevant en retour le signal de type « ping » renvoyé par le terminal 3₁ permettant de déterminer une latence du terminal Δβ. Par exemple, la surveillance RSS_RSV comporte une mesure de latence Δ_MS comme illustrée par la figure 2.

Notamment, le procédé de supervision comporte une agrégation temps réel AGRTR des données temps réels d'utilisation des ressources drα...drψ, Δβ du réseau domestique par des terminaux de communication connectés 3₁... 3ₘ au réseau domestique. L'agrégation AGRTR est apte à fournir, en temps réel, à au moins une interface de supervision mise en œuvre par un des terminaux connectés 3₁... 3ₘ, des données agrégées *dgr* d'utilisation des ressources du réseau domestique.

Sur l'exemple de la figure 2, l'agrégation temps réel AGRTR reçoit plusieurs signaux de données temps réels d'utilisation des ressources, respectivement drα...drµ, d'une analyse de trame TR_NLZ, et/ou drₙ₊₁...drₘ d'une collecte DR_CLT et, éventuellement, au moins un signal de latence Δβ d'une mesure de latence Δ_MS , et fournit alors un signal agrégé *dgr.*

Par exemple, la surveillance RSS_RSV comporte une agrégation temps réel AGRTR comme illustrée par la figure 2.

En particulier, le procédé de supervision comporte une détection de problème PB_DTCT relatif au réseau domestique déclenchant une recherche d'une origine du problème O_SRCH utilisant les données temps réels d'utilisation des ressources du réseaux par au moins un des terminaux connectés au routeur.

La détection de problème PB_DTCT reçoit soit directement les données temps réels d'utilisation des ressources drα...drµ et/ou drₙ₊₁...drₘ et/ou Δβ; soit, comme le montre la figure 2, le signal agrégé dgr, et fournit, lorsqu'il détecte un problème sur le réseau domestique : lenteurs de transmission, congestion du réseau (c'est-à-dire un ratio débit utilisé/capacité du réseau domestique proche de 1), etc., ou un problème naissant tel qu'un ralentissement d'au moins une transmission, un début de congestion, etc., un signal *pbid* déclenchant une recherche d'origine O_SRCH. Ce signal *pbid* peut être une simple commande de la recherche O_SRCH et/ou comporter un identifiant du problème, tel que l'adresse du terminal utilisant le plus de ressources du réseaux domestique et/ou l'adresse du terminal dont la latence est la plus élevée et/ou les données temps réels d'utilisation de ressources correspondante (débit montant et/ou débit descendant et/ou latence, etc.), etc.

Le procédé de supervision comporte une recherche d'origine O_SRCH qui utilise, en particulier, les données temps réels d'utilisation des ressources et/ou les données contenues dans le signal provenant de la détection de problème PB_DTCT. Sur la figure 2, la recherche fournit comme résultat un signal d'origine *oid* comportant des données d'identifications d'un ou plusieurs des éléments suivants : nombre de problèmes, pour chaque problème : le type de problème, le(s) terminaux posant problème, et, éventuellement, le(s) traitement(s) à l'origine du problème parmi ceux mis en oeuvre par le(s) terminaux...

En particulier, le procédé de supervision comporte un report X_DLY d'une exécution d'un traitement par un terminal connecté au routeur, le traitement exécuté par le terminal ayant été identifié par la recherche d'origine de problème O_SRCH.

Le report X_DLY recevant notamment le signal d'origine *oid* sera capable de générer une commande *slv* à destination du terminal à l'origine du problème détecté afin notamment de reporter un ou plusieurs traitements du terminal.

A noter, que le procédé de supervision peut superviser l'ensemble des terminaux connectés 3₁ à 3ₘ ou seulement une partie des terminaux connectés. Ainsi, le superviseur 21 effectue son traitement à partir de l'ensemble des données temps réels d'utilisation des ressources dr₁...drₘ (non illustré) de chacun des terminaux connectés 3₁ à 3ₘ ou seulement des données temps réels d'utilisation des ressources drα...drψ d'une partie des terminaux connectés 3α...3µ.

Le procédé de supervision peut être réalisé au moyen d'un programme comprenant des instructions de code de programme pour l'exécution des étapes du procédé de supervision lorsque ledit programme est exécuté par un processeur, notamment un processeur du routeur 2.

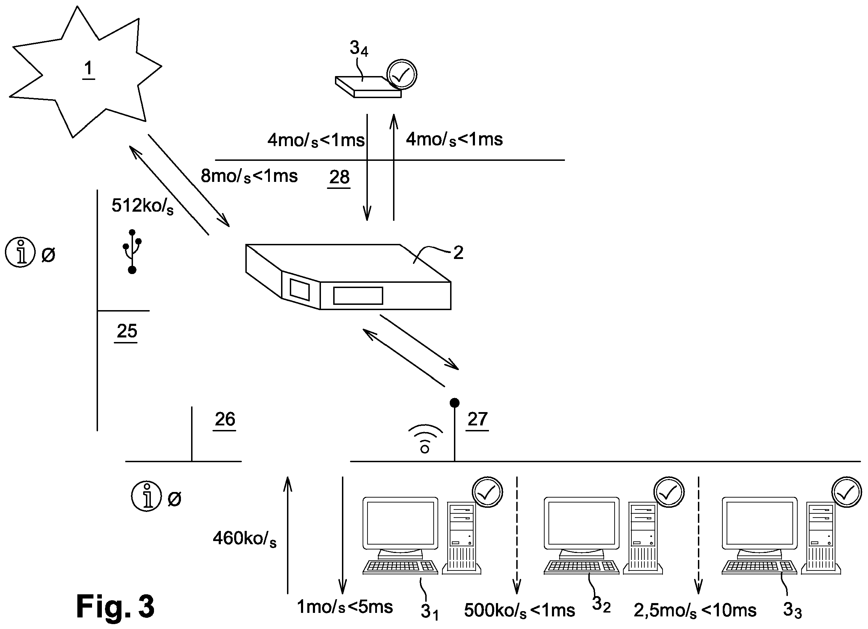

La figure 3 illustre un exemple d'interface de supervision reproduite par un des terminaux connectés.

L'interface de supervision fournit des données générées comportant, notamment, au moins un parmi les éléments suivants :
- les réseaux mis en œuvre : réseau domestique et, éventuellement, réseau distant 1, par exemple un réseau d'un fournisseur d'accès internet aussi nommé FAI ;
- le routeur 2 avec éventuellement ces différentes connectiques : connectique USB 25, connectique téléphonie HD 26, connectique WiFi 27, connectique Ethernet 28 ;
- et les terminaux connectés 3₁, 3₂, 3₃, 3₄, éventuellement répartie sur les connectiques : terminal android 3₁, terminal iPhone 3₂, terminal ordinateur 3₃... connectés en WiFi 27, terminal décodeur TV 3₄ connecté par réseau local filaire (par exemple Ethernet...), pas de terminaux ∅ sur les connectiques USB 25 et de téléphonie HD 26 ;
- les flux actifs entre le routeur et au moins un des terminaux connectés symbolisés sur la figure 3 par les flèche ;
- les volumes d'échanges entre le routeur et au moins un des terminaux connectés en voie montante et/ou descendante, notamment mesurée en octets ;
- la latence entre le routeur et au moins un des terminaux connectés,
- les volumes d'échanges entre le routeur 2 et le réseau distant 1 en voie montante et/ou descendante, notamment mesurée en octets ;
- la latence entre le routeur 2 et le réseau distant 1, etc.

Sur l'exemple de la figure 3, les débits instantanés échangés sont les suivants :
- les débits globaux (entre le routeur et le réseau distant 1) sont en voie descendante de 8mo/s et en voie montante de 512ko/s ;
- les débits échangés sur le réseau domestique avec le décodeur TV 3₄ sont en voie descendante de 4mo/s et en voie montante de 52ko/s ;
- les débits échangés sur le réseau domestique avec le terminal android TV 3₁ sont en voie descendante de 1mo/s et en voie montante de 460ko/s ;
- les débits échangés sur le réseau domestique avec le terminal iPhone TV 3₂ sont en voie descendante de 500ko/s;
- les débits échangés sur le réseau domestique avec le terminal 3₃ sont en voie descendante de 2,5mo/s.

Sur l'exemple de la figure 3, les latences sont les suivants :
- la latence global (entre le routeur et le réseau distant 1) est inférieure à 1ms;
- la latence sur le réseau domestique avec le décodeur TV 3₄ est inférieure à 1ms;
- la latence sur le réseau domestique avec le terminal Android TV 3₁ est inférieure à 5ms;
- la latence sur le réseau domestique avec le terminal iPhone TV 3₂ est inférieure à 1ms;
- la latence sur le réseau domestique avec le terminal 3₃ est inférieure à 10ms.

L'interface de supervision peut proposer à l'utilisateur d'un terminal connecté au réseau domestique mettant en œuvre l'interface de supervision d'interagir pour déclencher le temporisateur 215 pour un terminal choisi. Par exemple, l'utilisateur voyant que le temps de latence du terminal 3₃ est la plus élevé peut requérir une solution à un problème de lenteur ressenti sur le réseau domestique en cliquant sur la flèche descendante reproduite ce qui déclenche le temporisateur 215 pour au moins un des traitements mis en œuvre par le terminal 3₃ en question.

Les traitements temporisés sont notamment tous les traitements actifs sur le terminal 33 au moment de la requête de l'utilisateur, ou uniquement les traitements ne nécessitant pas une interactions de l'utilisateur, ou uniquement les traitements de mises à jour, ou des traitements sélectionnés suite à une réponse de l'utilisateur à un envoi à l'utilisateur de la liste des traitements actifs pour qu'il choisisse soit les traitements qui ne doivent pas être temporisés soit les traitements qui peuvent être temporisés... Ainsi, dans le cas où seule une partie des traitements sont temporisés, un utilisateur du terminal 3₃ ne sera pas gêné par la temporisation des traitements mis en œuvre par le terminal 3₃ car les traitements avec lesquels il interagit ne seront pas impactés au moins dans un premier temps. En effet, il peut être envisagé que le temporisateur 215 tente une résolution des problèmes de charge du réseau domestique par étape, en temporisant d'abord des traitements de mise à jour uniquement, puis tous les traitements non interactifs, et seulement si le problème de charge subsiste, tous les traitements de ce terminal 3₃.

L'interface de supervision peut proposer à l'utilisateur d'un terminal connecté au réseau domestique mettant en œuvre l'interface de supervision d'interagir pour prioriser un terminal, par exemple le décodeur TV 3₄, voir un traitement mis en œuvre par ce terminal. Ainsi le temporisateur 215 mis en œuvre automatiquement en fonction l'origine du problème détecté ne pourras pas temporiser ce traitement en particulier voire aucun traitement mis en œuvre par ce terminal 3₄.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en œuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en œuvre une fonction ou un ensemble de fonction selon la description ci-dessous. Un composant matériel correspond à tout élément d'un ensemble matériel (ou hardware) apte à mettre en œuvre une fonction ou un ensemble de fonctions.

## Revendications

1. Routeur d'un réseau domestique apte à être connecté à plusieurs terminaux de communication (3₁...3ₙ), **caractérisé en ce que** le routeur (2) comporte :
- un récepteur de données temps réels d'utilisation des ressources du réseau par au moins un terminal de communication provenant du au moins un terminal de communication ; et
- un superviseur (21) des ressources du réseau domestique à partir des données temps réels reçues d'utilisation des ressources (drα...drµ) du réseau domestique par au moins un des terminaux de communication (3₁...3ₙ) connectés au réseau domestique.

2. Routeur d'un réseau domestique selon la revendication précédente, **caractérisé en ce que** le superviseur (21) comporte un analyseur (210) des trames passant par le routeur, l'analyseur déterminant à partir des trames (du_m₁, du_d₁... du_mₙ, du_dₙ ) au moins des données temps réels d'utilisation des ressources (drα...drµ) du réseau domestique par au moins un des terminaux (3₁...3ₙ) connectés au routeur (2).

3. Routeur d'un réseau domestique selon la revendication précédente, **caractérisé en ce que** l'analyseur (210) de trames détermine, pour une trame (du_mᵢ, dudᵢ) passant par le routeur (2), le terminal (3ᵢ) échangeant la trame à partir d'une adresse contenu par la trame.

4. Routeur d'un réseau domestique selon l'une quelconque des revendications 2 ou 3, **caractérisé en ce que** l'analyseur (210) de trames stocke sur une fenêtre de temps prédéterminée glissante les données temps réels d'utilisation (driᵢ) des ressources du réseau domestique par un terminal (3ᵢ).

5. Routeur d'un réseau domestique selon l'une quelconque des revendications précédentes, **caractérisé en ce que** le superviseur (21) comporte un collecteur (216) de données temps réels d'utilisation des ressources (drₙ₊₁...drₘ) du réseau domestique par au moins un des terminaux (3ₙ₊₁...3_{m,} 3_{m'}) connectés au routeur, les données temps réels d'utilisation des ressources (drₙ₊₁...drₘ) par un terminal provenant du terminal (3ₙ₊₁...3_{m,} 3_{m'}).

6. Routeur d'un réseau domestique selon la revendication précédente, **caractérisé en ce que** le routeur comporte un transmetteur de service (20TS) établissant une connexion de service avec un terminal (3ₙ₊₁), la connexion de service étant déclenchée par une connexion de communication du terminal (3ₙ₊₁) au routeur (2), la connexion de service permettant au collecteur de données (216) de récupérer les données temps réels d'utilisation des ressources (drₙ₊₁) par le terminal (3ₙ₊₁).

7. Routeur d'un réseau domestique selon l'une quelconque des revendications précédentes, **caractérisé en ce que** le superviseur (21) comporte un mesureur de latence (212) émettant un signal de type « ping » à destination d'au moins un terminal (3ₙ) connecté au routeur (2) et recevant en retour le signal de type « ping » renvoyé par le terminal (3ₙ) permettant au mesureur (212) de déterminer une latence du terminal (Δβ).

8. Routeur d'un réseau domestique selon l'une quelconque des revendications précédentes, **caractérisé en ce que** le superviseur (21) comporte un agrégateur temps réel (211) des données temps réels d'utilisation des ressources (drα...drµ, Δβ) du réseau domestique par des terminaux de communication connectés (3₁... 3ₙ) au réseau domestique, l'agrégateur (211) étant apte à fournir, en temps réel, à au moins une interface de supervision mise en œuvre par un des terminaux connectés (3₁... 3ₙ), des données agrégées (dgr) d'utilisation des ressources du réseau domestique.

9. Routeur d'un réseau domestique selon l'une quelconque des revendications précédentes, **caractérisé en ce que** le superviseur (21) comporte un détecteur de problème (213) relatif au réseau domestique déclenchant un moteur de recherche d'une origine du problème (214) utilisant les données temps réels d'utilisation des ressources (drα...drµ, Δβ) du réseaux par au moins un des terminaux (3₁... 3ₙ) connectés au routeur (2).

10. Interface de supervision apte à être mise en œuvre par au moins un terminal connecté (3₁... 3ₙ) à un routeur (2) d'un réseau domestique, l'interface de supervision comportant un générateur de données de reproduction fonction de données temps réels fournies par un superviseur (21) des ressources du réseau domestique à partir de données temps réels reçues d'utilisation des ressources (drα...drµ) du réseau domestique par au moins un des terminaux de communication (3₁... 3ₙ) connectés au réseau domestique, les données temps réels d'utilisation des ressources du réseau par au moins un terminal de communication étant reçues en provenance du au moins un terminal de communication.

11. Procédé de supervision de l'utilisation d'un réseau domestique comportant un routeur (2) apte à être connecté à plusieurs terminaux de communication (3₁... 3ₙ), **caractérisé en ce que** le procédé de supervision comporte une surveillance (RSS_SRV) des ressources du réseau domestique à partir de données temps réels reçues d'utilisation des ressources (drα...drµ) du réseau domestique par des terminaux de communication connectés (3₁... 3ₙ) au réseau domestique, les données temps réels d'utilisation des ressources du réseau par au moins un terminal de communication étant reçues en provenance du au moins un terminal de communication.

12. Procédé de supervision selon la revendication précédente, **caractérisé en ce que** le procédé de supervision comporte une analyse (TR_NLZ) des trames passant par le routeur (2), l'analyse (TR_NLZ) déterminant à partir des trames (du_m1...du_dm) au moins des données temps réels d'utilisation des ressources (drα...drµ) du réseau domestique par au moins un des terminaux (3₁... 3ₙ) connectés au routeur (2).

13. Procédé de supervision selon l'une quelconque des revendications 9 ou 10, **caractérisé en ce que** le procédé de supervision comporte une détection de problème(PB_DTCT) relatif au réseau domestique déclenchant une recherche d'une origine du problème (O_SRCH) utilisant les données temps réels d'utilisation des ressources du réseaux par au moins un des terminaux (3₁... 3ₙ) connectés au routeur (2).

14. Procédé de supervision selon la revendication précédente **caractérisé en ce que** le procédé de supervision comporte un report (X_DLY) d'une exécution d'un traitement par un terminal (3₁... 3ₙ) connecté au routeur (2), le traitement exécuté par le terminal ayant été identifié par la recherche d'origine de problème (O_SRCH).

15. Programme comprenant des instructions de code de programme pour l'exécution des étapes du procédé de supervision selon l'une quelconque des revendications 11 à 14 lorsque ledit programme est exécuté par un processeur.

## Patentansprüche

1. Router eines Heimnetzwerks, der geeignet ist, mit mehreren Kommunikationsendgeräten (3₁...3ₙ) verbunden zu sein, **dadurch gekennzeichnet, dass** der Router (2) Folgendes aufweist:
- einen Empfänger für Echtzeitdaten der Nutzung der Ressourcen des Netzwerks durch wenigstens ein Kommunikationsendgerät, die von dem wenigstens einen Kommunikationsendgerät stammen; und
- einen Überwacher (21) der Ressourcen des Heimnetzwerks anhand der empfangenen Echtzeitdaten der Nutzung der Ressourcen (drα...drµ) des Heimnetzwerks durch wenigstens eins der Kommunikationsendgeräte (3₁...3ₙ), die mit dem Heimnetzwerk verbunden sind.

2. Router eines Heimnetzwerks nach dem vorhergehenden Anspruch, **dadurch gekennzeichnet, dass** der Überwacher (21) einen Analysator (210) der Frames aufweist, die durch den Router laufen, wobei der Analysator anhand der Frames (du_m₁, du_d₁... du_mₙ, du_dₙ) wenigstens Echtzeitdaten der Nutzung der Ressourcen (drα...drµ) des Heimnetzwerks durch wenigstens eins der Endgeräte (3₁...3ₙ), die mit dem Router (2) verbunden sind, bestimmt.

3. Router eines Heimnetzwerks nach dem vorhergehenden Anspruch, **dadurch gekennzeichnet, dass** der Frames-Überwacher (210) für einen Frame (du_mᵢ, du_dᵢ), der durch den Router (2) läuft, das Endgerät (3i), das den Frame austauscht, anhand einer Adresse bestimmt, die im Frame enthalten ist.

4. Router eines Heimnetzwerks nach einem der Ansprüche 2 oder 3, **dadurch gekennzeichnet, dass** der Frames-Überwacher (210) über ein vorbestimmtes gleitendes Zeitfenster die Echtzeitdaten der Nutzung (driᵢ) der Ressourcen des Heimnetzwerks durch ein Endgerät (3ᵢ) speichert.

5. Router eines Heimnetzwerks nach einem der vorhergehenden Ansprüche, **dadurch gekennzeichnet, dass** der Überwacher (21) einen Erfasser (216) für Echtzeitdaten der Nutzung der Ressourcen (drₙ₊₁... drₘ) des Heimnetzwerks durch wenigstens eins der Endgeräte (3ₙ₊₁... 3_{m,} 3_{m'}), die mit dem Router verbunden sind, aufweist, wobei die Echtzeitdaten der Nutzung der Ressourcen (drₙ₊₁... drₘ) durch ein Endgerät vom Endgerät (3ₙ₊₁... 3_{m,} 3_{m'}) stammen.

6. Router eines Heimnetzwerks nach dem vorhergehenden Anspruch, **dadurch gekennzeichnet, dass** der Router einen Dienstsender (20TS) aufweist, der eine Dienstverbindung mit einem Endgerät (3ₙ₊₁) herstellt, wobei die Dienstverbindung von einer Kommunikationsverbindung des Endgeräts (3ₙ₊₁) mit dem Router (2) ausgelöst wird, wobei es die Dienstverbindung dem Datenerfasser (216) ermöglicht, die Echtzeitdaten der Nutzung der Ressourcen (drₙ₊₁) durch das Endgerät (3ₙ₊₁) zu beziehen.

7. Router eines Heimnetzwerks nach einem der vorhergehenden Ansprüche, **dadurch gekennzeichnet, dass** der Überwacher (21) einen Latenzmesser (212) aufweist, der ein "Ping"-Signal an wenigstens ein Endgerät (3ₙ) aussendet, das mit dem Router (2) verbunden ist, und das "Ping"-Signal zurück empfängt, das vom Endgerät (3ₙ) zurück gesendet wurde, wodurch der Messer (212) eine Latenz des Endgeräts (Δβ) bestimmen kann.

8. Router eines Heimnetzwerks nach einem der vorhergehenden Ansprüche, **dadurch gekennzeichnet, dass** der Überwacher (21) einen Echtzeitaggregator (211) der Echtzeitdaten der Nutzung der Ressourcen (drα...drµ, Δβ) des Heimnetzwerks durch Kommunikationsendgeräte, die mit dem Heimnetzwerk verbunden sind (3₁... 3ₙ), aufweist, wobei der Aggregator (211) geeignet ist, in Echtzeit wenigstens einer Überwachungsschnittstelle, die von einem der verbundenen Endgeräte (3₁... 3ₙ) eingesetzt wird, aggregierte Daten (dgr) der Nutzung der Ressourcen des Heimnetzwerks bereitzustellen.

9. Router eines Heimnetzwerks nach einem der vorhergehenden Ansprüche, **dadurch gekennzeichnet, dass** der Überwacher (21) einen Detektor für Probleme (213) in Bezug auf das Heimnetzwerk aufweist, der eine Maschine zur Suche nach einer Ursache des Problems (214) unter Nutzung der Echtzeitdaten der Nutzung der Ressourcen (drα...drµ, Δβ) des Netzwerks durch wenigstens eins der Endgeräte (3₁... 3ₙ), die mit dem Router (2) verbunden sind, auslöst.

10. Überwachungsschnittstelle, die geeignet ist, von wenigstens einem Endgerät (3₁... 3ₙ) eingesetzt zu werden, das mit einem Router (2) eines Heimnetzwerks verbunden ist, wobei die Überwachungsschnittstelle einen Erzeuger von Daten zur Reproduktion abhängig von Echtzeitdaten aufweist, die von einem Überwacher (21) der Ressourcen des Heimnetzwerks anhand von empfangenen Echtzeitdaten der Nutzung der Ressourcen (drα...drµ) des Heimnetzwerks durch wenigstens eins der Kommunikationsendgeräte (3₁... 3ₙ), die mit dem Heimnetzwerk verbunden sind, bereitgestellt werden, wobei die Echtzeitdaten der Nutzung der Ressourcen des Netzwerks durch wenigstens ein Kommunikationsendgerät von dem wenigstens einen Kommunikationsendgerät empfangen werden.

11. Verfahren zur Überwachung der Nutzung eines Heimnetzwerks, das einen Router (2) aufweist, der geeignet ist, mit mehreren Kommunikationsendgeräten (3₁... 3ₙ) verbunden zu sein, **dadurch gekennzeichnet, dass** das Überwachungsverfahren ein Überwachen (RSS_SRV) der Ressourcen des Heimnetzwerks anhand von empfangenen Echtzeitdaten der Nutzung der Ressourcen (drα...drµ) des Heimnetzwerks durch Kommunikationsendgeräte (3₁... 3ₙ), die mit dem Heimnetzwerk verbunden sind, aufweist, wobei die Echtzeitdaten der Nutzung der Ressourcen des Netzwerks durch wenigstens ein Kommunikationsendgerät von dem wenigstens einen Kommunikationsendgerät empfangen werden.

12. Überwachungsverfahren nach dem vorhergehenden Anspruch, **dadurch gekennzeichnet, dass** das Überwachungsverfahren eine Analyse (TR_NLZ) der Frames aufweist, die durch den Router (2) laufen, wobei die Analyse (TR_NLZ) anhand der Frames (du_m1 ...du_dm) wenigstens Echtzeitdaten der Nutzung der Ressourcen (drα...drµ) des Heimnetzwerks durch wenigstens eins der Endgeräte (3₁...3ₙ), die mit dem Router (2) verbunden sind, bestimmt.

13. Überwachungsverfahren nach einem der Ansprüche 9 oder 10, **dadurch gekennzeichnet, dass** das Überwachungsverfahren ein Detektieren von Problemen (PB_DTCT) in Bezug auf das Heimnetzwerk aufweist, das eine Suche nach einer Ursache des Problems (O_SRCH) unter Nutzung der Echtzeitdaten der Nutzung der Ressourcen des Netzwerks durch wenigstens eins der Endgeräte (3₁... 3ₙ), die mit dem Router (2) verbunden sind, auslöst.

14. Überwachungsverfahren nach dem vorhergehenden Anspruch, **dadurch gekennzeichnet, dass** das Überwachungsverfahren ein Aufschieben (X DLY) einer Ausführung einer Verarbeitung durch ein Endgerät (3₁... 3ₙ), das mit dem Router (2) verbunden ist, aufweist, wobei die Verarbeitung, die vom Endgerät ausgeführt wird, durch die Suche nach der Problemursache (O_SRCH) identifiziert wurde.

15. Programm umfassend Programmcode-Anweisungen zur Ausführung der Schritte des Überwachungsverfahrens nach einem der Ansprüche 11 bis 14, wenn das Programm durch einen Prozessor ausgeführt wird.

## Claims

1. Router of a domestic network able to be connected to a plurality of a plurality of communication terminals (3₁... 3ₙ), **characterized in that** the router (2) comprises:
- a receiver of real-time data of use of the resources of the network by at least one communication terminal from the at least one communication terminal; and
- a supervisor (21) of resources of the domestic network on the basis of the received real-time data of use of the resources (drα... drµ) of the domestic network by at least one of the communication terminals (3₁... 3ₙ) connected to the domestic network.

2. Router of a domestic network according to the preceding claim, **characterized in that** the supervisor (21) comprises an analyzer (210) of frames passing through the router, the analyzer determining on the basis of the frames (du_mᵢ, du_d₁... du_mₙ, du_dₙ) at least real-time data of use of the resources (drα... drµ) of the domestic network by at least one of the terminals (3₁... 3ₙ) connected to the router (2).

3. Router of a domestic network according to the preceding claim, **characterized in that** the frames analyzer (210) determines, for a frame (du_mᵢ, du_dᵢ) passing through the router (2), the terminal (3ᵢ) exchanging the frame on the basis of an address contained by the frame.

4. Router of a domestic network according to either one of Claims 2 and 3, **characterized in that** the frames analyzer (210) stores on a sliding predetermined time window the real-time data of use (driᵢ) of the resources of the domestic network by a terminal (3ᵢ).

5. Router of a domestic network according to any one of the preceding claims, **characterized in that** the supervisor (21) comprises a collector (216) of real-time data of use of the resources (drₙ₊₁... drₘ) of the domestic network by at least one of the terminals (3ₙ₊₁... 3ₘ, 3_{m'}) connected to the router, the real-time data of use of the resources (drₙ₊₁... drₘ) by a terminal coming from the terminal (3ₙ₊₁... 3ₘ, 3_{m'}).

6. Router of a domestic network according to the preceding claim, **characterized in that** the router comprises a service transmitter (20TS) establishing a service connection with a terminal (3ₙ₊₁), the service connection being triggered by a communication connection of the terminal (3ₙ₊₁) to the router (2), the service connection allowing the data collector (216) to recover the real-time data of use of the resources (drₙ₊₁) by the terminal (3ₙ₊₁).

7. Router of a domestic network according to any one of the preceding claims, **characterized in that** the supervisor (21) comprises a latency meter (212) sending a signal of "ping" type destined for at least one terminal (3ₙ) connected to the router (2) and receiving in return the signal of "ping" type returned by the terminal (3ₙ) allowing the meter (212) to determine a latency of the terminal (Δβ).

8. Router of a domestic network according to any one of the preceding claims, **characterized in that** the supervisor (21) comprises a real-time aggregator (211) of the real-time data of use of the resources (drα... drµ, Δβ) of the domestic network by communication terminals (3₁... 3ₙ) connected to the domestic network, the aggregator (211) being configured to provide, in real time, aggregated data (dgr) of use of the resources of the domestic network to at least one supervision interface implemented by one of the connected terminals (3₁... 3ₙ).

9. Router of a domestic network according to any one of the preceding claims, **characterized in that** the supervisor (21) comprises a problem detector (213) configured to detect a problem of the domestic network triggering a search engine for searching for an origin of the problem (214) using the real-time data of use of the resources (drα... drµ, Δβ) of the network by at least one of the terminals (3₁... 3ₙ) connected to the router (2).

10. Supervision interface able to be implemented by at least one terminal (3₁... 3ₙ) connected to a router (2) of a domestic network, the supervision interface comprising a generator of reproduction data dependent on real-time data provided by a supervisor (21) of the resources of the domestic network on the basis of received real-time data of use of the resources (drα... drµ) of the domestic network by at least one of the communication terminals (3₁... 3ₙ) connected to the domestic network, the real-time data of use of the resources of the network by at least one communication terminal being received from the at least one communication terminal.

11. Method for supervising use of a domestic network comprising a router (2) able to be connected to a plurality of communication terminals (3₁... 3ₙ), **characterized in that** the supervision method comprises a monitoring (RSS_SRV) of the resources of the domestic network on the basis of received real-time data of use of the resources (drα... drµ) of the domestic network by communication terminals (3₁... 3ₙ) connected to the domestic network, the real-time data of use of the resources of the network by at least one communication terminal being received from the at least one communication terminal.

12. Supervision method according to the preceding claim, **characterized in that** the supervision method comprises analyzing (TR_NLZ) the frames passing through the router (2), the analyzing (TR_NLZ) determining on the basis of the frames (du_m1... du_dm) at least real-time data of use of the resources (drα... drµ) of the domestic network by at least one of the terminals (3₁... 3ₙ) connected to the router (2).

13. Supervision method according to either one of Claims 9 and 10, **characterized in that** the supervision method comprises a detection of the problem (PB_DTCT) relating to the domestic network triggering a search for an origin of the problem (O_SRCH) using the real-time data of use of the resources of the network by at least one of the terminals (3₁... 3ₙ) connected to the router (2).

14. Supervision method according to the preceding claim, **characterized in that** the supervision method comprises a postponement (X_DLY) of an execution of a processing by a terminal (3₁... 3ₙ) connected to the router (2), the processing executed by the terminal having been identified by the problem origin search (O_SRCH).

15. Program comprising program code instructions for executing the steps of the supervision method according to any one of Claims 11 to 14 when said program is executed by a processor.
